# EUROPEAN PATENT SPECIFICATION

(11) **EP 1 381 969 B1**
(45) Date of publication and mention of the grant of the patent: **17.11.2010**
(21) Application number: 01918761.6
(22) Date of filing: 16.03.2001
(51) Int. Cl.: G06F 17/30

(54) **A SYSTEM AND METHOD FOR ANALYZING A QUERY AND GENERATING RESULTS AND RELATED QUESTIONS**
SYSTEM UND METHODE ZUR ANALYSE EINER ANFRAGE UND ZUR ERZEUGUNG VON ANTWORTEN UND DAMIT VERBUNDENEN FRAGEN
SYSTEME ET PROCEDE D'ANALYSE D'UNE INTERROGATION ET DE GENERATION DE RESULTATS ET DE QUESTIONS APPARENTEES

(30) Priority: 16.03.2000 US 189925 P
(43) Date of publication of application: 21.01.2004
(73) Proprietor: Poly Vista, Inc., Houston, TX 77004 (US)
(72) Inventor: ANWAR, Mohammed, S., Houston, TX 77055 (US)
(74) Representative: W.P. Thompson & Co.
(86) International application number: PCT/US2001/008467
(87) International publication number: WO 2001/069455

(56) References cited:
- WO-A-98/25217
- WO-A-99/21108
- US-A- 5 913 215
- US-A- 6 006 225
- GANTI V ET AL: "MINING VERY LARGE DATABASES" COMPUTER, IEEE COMPUTER SOCIETY, LONG BEACH., CA, US, US, vol. 32, no. 8, August 1999 (1999-08), pages 38-45, XP000923707 ISSN: 0018-9162

## Description

### RELATED APPLICATION

This application claims provisional priority to United States Provisional Application Serial No. 60/189,925 filed 16 March 2000.

### BACKGROUND OF THE INVENTION

### 1. Field of the Invention

The present invention relates to a system and method for analyzing a user query or natural language query and generating a results and related questions.

More particularly, the present invention relates to a system and method for enhancing information retrieval from a user posed query (Boolean or natural language) including determining keywords associated with the query, producing a result corresponding to the query, generating terms related to the keywords, supplying the keywords and terms to a data mining routine, generating related results and/or information and questions associated with additional results and/or information related to the query, and displaying the results and questions, which the user can then activated and/or investigated.

### 2. Description of the Related Art

Current web searching generally involves construction of a query by a user that is then sent via an information infrastructure such as the internet or world wide web to an application site for processing as already disclosed by document US-A-6 006-225. The processing site, typically a search engine site, then obtains a set of sites on the infrastructure that have information relating or corresponding to the query. The search engine site can also rank the information containing-sites relative to some particular internal ranking procedure. However, search engines and the sites devoted to them are currently ill prepared to take advantage of information deposited in large database especially multi-dimensional database such as OLAP database and are ill prepared to delve deeply into data to find other information that may be of interest to a user.

This other information is generally contained in databases that often require sophisticated routines to act as intermediaries so that the search engine, and ultimately the user, can extract meaningfully data and information from them. The intermediaries are generally of two types: middleware interfaces (MWIs) and data mining routines or algorithms (DMRs). MWIs provide information about data in the data database, *e*.*g*., variable lists, type of data preprocessing (averages, means, standard deviations, *etc*.), data storage criteria and classification, *etc.* DMRs provide mechanisms for extracting data from the database using routines to further process and classify data in the database. For data mining routines to work properly, they need the actual records or database layout in order to construct data manipulations and ranking, *e*.*g*., construction of a decision tree prior to performing a ranking of the data in the decision tree. MWIs exist for relational database and in a co-pending application, the inventor described a MWI for multi-dimensional database such as OLAP database, United States Patent Application Serial No. 09/713,674, filed 15 November 2000.

Thus there is a need in the art for a system that will allow a user to utilize data stored in diverse databases more effectively and to provide the user with a method for enhancing and/or expanding the richness of data and/or information corresponding to or related to a user's query and/or to refine the query to obtain results of interest to the user.

### SUMMARY OF THE INVENTION

The present invention relates to a method for analyzing a query and generating related results according to claim 1.

The present invention also provides a method for enhancing information retrieval content from a query including retrieving direct data responsive to the query, extracting query element from the query, inputting the elements to a data mining routine, and outputting results from the data mining routine, where the results include related data and suggested questions for enhancing or refining retrieved results.

The present invention also provides a system for enhancing query information retrieval content, according to claim 10. The system includes a remote digital processing unit (rDPU), a query information retrieval content enhancing server (QIRCES), a database server (DBS), an information infrastructure such as a local area network (LAN), a wide area network (WAN) or a global information infrastructure (GII) interconnecting the rDPU and the servers. The rDPU includes a query generator and communication hardware and software for interacting with the servers over the information infrastructure. The QIRCES includes query information content enhancing software comprising a scheduler, a query parser, a user profiler, a database, a query/results database (qrDB), middleware interface (MWI), data mining algorithms or routines (DMRs), a library of database interfaces, an email controller, communication hardware and software and visualization software, and an expert. And, the DBS includes an informational database (iDB) and database services such as OLAP services for an OLAP database and SQL services.

The present invention also provides a method for analyzing a query and generating related results including forming a query, inputting the query to a DB, outputting results from the DB corresponding directly to the query, extracting query elements from the query, where the element comprises keywords and optionally constraints, generating related query elements comprising related keywords and optionally related constraints, inputting the elements and/or related elements to a DMR and outputting related results and questions from the DMR for query information retrieval content refinement.

The present invention also provides a method for analyzing a query and generating related results and refinement questions including determining query element associated with the query, polling a database to determine related query elements, selecting some or all of the elements and/or related elements, supplying the selected elements and/or related element to a data mining routine, generating related results and questions from the DMR for query information retrieval content refinement and outputting the related results and questions for user interaction.

The present invention also provides a system including a middleware interface, a data mining communication protocol, a database communication protocol, a query element classification protocol designed to determine query elements (keywords and constraints) from a query and classify the elements according to a classification protocol compatible with a given database, a related query element routine, which generates related query elements based on the element classification and interaction with the database, a communication protocol where the elements and related elements submitted to a data mining routine, a receiving routine to receive results from the data mining routine and a presentation routine where the results and questions for refining the query results from the data mining routine are presented to a user in a predetermined statically significant order so that the user can enhance the information retrieval content of his/her original query.

The present invention also provides a method for enhancing query information retrieval content including: obtaining a query comprising at least one keyword and optional constraints including a containment constraint, a grouping constraint, a connector constraint or a data constraint; generating at least one related keyword and optionally related constraints; obtaining results and/or information for the query "as is"; generating related results and/or information and at least one question related to the query via the operation of a data mining routine; displaying the results and/or information, the related results and/or information and questions; selecting a question; generating question results and/or information and sub-questions; displaying the question results and/or information and sub-questions; and repeating the last three steps to from a query-by-question path. The method can also include the step of saving the path. The method can also includes comparing saved paths.

### DESCRIPTION OF THE DRAWINGS

The invention can be better understood with reference to the following detailed description together with the appended illustrative drawings in which like elements are numbered the same:
Figure 1 depicts a block diagram of a preferred overall system of this invention for enhancing information content retrieval from a query;
Figure 2 depicts a block diagram of a preferred embodiment of a system communication protocol of the system of Figure 1;
Figure 3 depicts a block diagram of a preferred system architecture of the system of Figure 1;
Figure 4 depicts a screen image of a preferred embodiment of a user interface of the present invention showing a preferred embodiment of a natural language query input screen;
Figure 5 depicts a screen image of a preferred embodiment of a user interface of the present invention showing a preferred embodiment of a Boolean query input screen;
Figure 6 depicts a screen image of a preferred embodiment of a user interface of the present invention showing a preferred embodiment of a search results screen; and
Figure 7 depicts a screen image of a preferred embodiment of a user interface of the present invention showing a preferred embodiment of result specific screen.

### DETAILED DESCRIPTION OF THE INVENTION

The inventor has found that a system and method for enhancing retrieved informational content from a query-based search format can be constructed where the system and method returns not only results and/or information related directly to the query, but also returns results and/or information related to or associated with the query. The inventor has found that this system and method can be implemented on a distributed digital processing environment, where the environment includes remote digital processing units (rDPUs) and server digital processing units (sDPUs or Servers) communicationally interconnected via an information infrastructure including a global information infrastructure (GII) such as the internet or the world wide web, or a local network or LAN.

The present invention broadly relates to a system and method for enhancing the results and/or informational content retrieved from a query, whether the query is a Boolean query or a natural language query. The results and/or informational content is enhanced by running one or more data mining routines against the query to generate related data and one or more possible sub-queries that may be of interest to the user.

The present invention broadly relates to a method for enhancing the results and/or informational content retrieved from a query including receiving a query, obtaining results and/or information directly related to the query, submitting the query to one or more data mining routines which generate results and/or information related to the query and generate one or more options or sub-queries for refining the query or for investigating results and/or information related to the query or that the system determines may be of interest to the user. The related data and sub-queries are presented to the user in a list or page format so that the user can review and/or investigate the data or sub-queries by clicking on a desired related data result or a desired sub-query. When a user selects a sub-query, the system will act on the sub-query and generate results and/or information related to the sub-query as well as sub-sub-queries based on the processing the sub-query. Thus, the user can be walked down a query-by-question pathway to improve result and information content derivable from any given query.

The system includes routines to receive a query and to post the query "as is" to a DB. If the query is a natural language query, then the system includes routines to extract elements from the query. The system also includes routines to determine related query element based on the query element (keywords and connectors). Once the system has the query elements and related query elements, the system passes these elements to one or more data mining routines (DMRs), where the all of the elements, or some selected elements, are used in each DMR to generate related results comprising related results and/or information and one or more suggested sub-queries for refining and enhancing the information content derived from the query. The related results and suggested sub-queries can be presented to the user as an active list or on a page-by-page basis. Although the DMRs can communicate with databases, including without limitation multidimensional databases (MDDBs), relational databases, hierarchical databases or the like, directly, the preferred communication pathway involves an intermediary called a middleware interface as described in co-pending application United States Patent Application Serial No. 09/713,674, filed 15 November 2000.

The system can also include a database for storing queries and results. The system can also include routines for running a user profile against the stored queries and results to inform a user of results and/or information that the user may find of interest based on the user's profile. The system can also include routines for forming user displayable screens or pages devoted to frequently submitted queries, interesting data resulting from queries, or the entire contents of the query/results database. The system can also include routines for performing data analysis and manipulation of data in the query/result database alone or in conjunction with data analysis and manipulation of data from Dbs. The system can also include background routines that search DBs and other databases for results and/or information that may be of interest to users based on the profiles in the user profile database. The user profile database can be categorized or classified based on a scheme that groups users into categories or classes so that background data mining protocols can be tailored to derive results and/or information for all users or for each category or class. The system can also include user interactive procedures for ranking the relevancy of related data and sub-queries to further refine user profiling and enhance and enrich a user's access to results and/or information of interest to the user. The system can also includes an email interface for providing the results in an email context.

For internet implementation, the system of the present invention comprises user rDPUs and sDPUs including an application server (asDPU) and a database server (dbsDPU). The rDPUs include a browser which is the communication conduit between the user and the asDPU, which is generally based on HTML or some other similar communication protocol. The asDPU communications with the dbsDPUs either directly or via a MWI using standard database communication protocols.

Suitable digital processing units, both remote DPUs and Servers, can be any digital processing device including, without limitation, digital processing devices manufactured by Dell Corporation, Compaq Corporation, Intel Corporation, Motorola Corporation, Texas Instruments, Inc., IBM, AMD, Cyrix, or any other manufacturing of digital processing devices. The memory can be any memory compatible with the particular digital processing device.

Suitable operating systems include, without limitation, windowing operating systems, UNIX based operating systems or any other operating system. Suitable communication hardware and software can be any software and hardware that supports any narrow band or wide band communication protocols, with wide band, high speed communication protocols being preferred.

Suitable data mining routines or algorithms that can be used by the system of this invention include, without limitations, a chi squared DMR, a correlation DMR, a decision tree DMR, a market basket type DMR, a naive Bayes DMR based on Bayesain statistics, an association DMR, a cluster DMR or other similar data mining routines or algorithms or mixtures or combinations of one or more DMRs, some of which are described in co-pending United States Patent Application Serial No. 09/713,674, filed 15 November 2000.

### User Interface

### Login Page

When a user connects to the QIRCES system for the first time, the system prompts the user for a unique user ID and password, with standard password reentry to insure proper password assignment. Once a user ID and password has been established and stored by the system, the next time the user connects to the system, entry of the user ID and password will allow the user access to the system. If the user is a GII user using a browser to connect to the QIRCES server, then the user can elect to have authentication processing saved in browser cookie file. When the user registers (first time user), the user can elect to save the login file (user ID and password) in a cookie. Of course, the user can elect this option any time he/she connects to the system. If the user chooses to save her/his login profile in a cookie file, then the Login Page will not appear the next time the user connects to the system. If the user elects not to have a cookie file containing the necessary login information or if the user's browser does not support cookies, then the Login Page will appear every time the user connects to the server and the user will have to complete the standard login procedure.

### User's Home Page

In a preferred implementation of the QIRCES system of this invention, each user would have a home page on the server, which is created when a user first registers with the QIRCES system. Each time the user connects to the QIRCES system after registration, the user goes directly to his/her home page. The user can customize her/his page. The home page is used by the user to save results to set and modify preferences and to view postings from the system that fit the user's profile or that the system determines may be of interest to the user.

After the user passes authentication, the browser displays the user Home Page. The main section of this page allows the user to navigate projects, favorites, preferences, view hot news, recent projects, server notifications, *etc.* If the browser supports frames, then the page can be frame-based for further convenience and functionality. This page preferably includes navigation and information areas or domains. The first domain or area, which can be located in the left 20% of the page by default (changeable), can include links to: (1) the main section of the user's Home Page; (2) the user's workplace; (3) a favorites page; and (4) the user's preferences.

If the user has an email account on the system, the server administrator can provide a web-based interface to a user's mailbox. This interface can be included in the user's Home Page and there can be a link to this interface in the navigation area of the Home Page. The user's workplace link has child links to the user's recent projects, a new project wizard and other workplace related functions. The user's favorites page link includes user defined child links organized in folders that in their turn can have child links and folders. The server administrator can predefine some links and folders, while other can be defined by the user. The user's preferences link includes child links to different preference sets such as global preferences, mailbox preferences, query construction preferences, results preferences, *etc.*

### User's Workplace

In a preferred embodiment of the QIRCES system, the system creates for each user a user workplace. The workplace is used by the user to create projects that allow the user to gather information on an as-needed basis or a periodic basis. The system saves information about each user project for review, retrieval, modification, analysis or the like. Via workplace preferences, the user can choose the type of information displayed when the user workplace page is opened, *e*.*g*., display recent projects sorted by last access date or display only the latest accessed projects or display the most frequency accessed projects. The workplace page can also include a link to a new project wizard that allows the user to create a new project. When working with a project, the user can switch the workplace interface between two modes: (1) a confirmatory mode and (2) an exploratory mode. The user can work in either mode independently.

The confirmatory mode allows the user to go directly a particular database or database site such as an MDX cube and pose a query to that particular database, *i.e*. the confirmatory mode is a single DB-single query mode. If the user wants to work with different cubes or queries, the user must create a different project, one for each cube and/or query.

The exploratory mode allows the user to pose a query to any number or database or to all databases that are accessible to the system and contain information relevant to the posed query. The exploratory mode uses a search engines and surfer type interface. Results are then displayed for the user's review.

There are two kinds of searches: Boolean searches and Natural Language searches. The Natural Language search is preferable English; however, the Natural Language interface can support other languages. When operating in English, the Natural Language search mode is sometimes called the English Language search mode. Boolean searching is based on a set of constraints. Each constraint includes a text field (keyword - word or words), a containment option (must contain, must not contain, should contain, *etc*.), a grouping option (the word(s), the phrase, *etc*.), a connectors connecting text fields (and, or, not, and not, nor, *etc*.) and a data option having the following variants: (1) filter; (2) dimension member; (3) dimension, drilled down to the level of member; (4) member's child members; and (5) drilled down parent member. Search engine results can be formatted, sorted or categorized as desired.

### Search Engine Interface

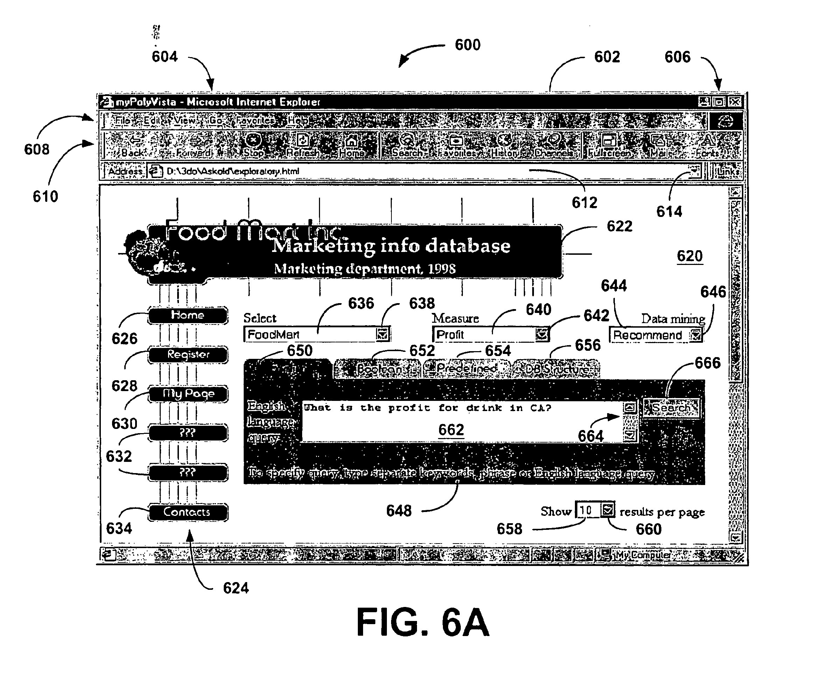

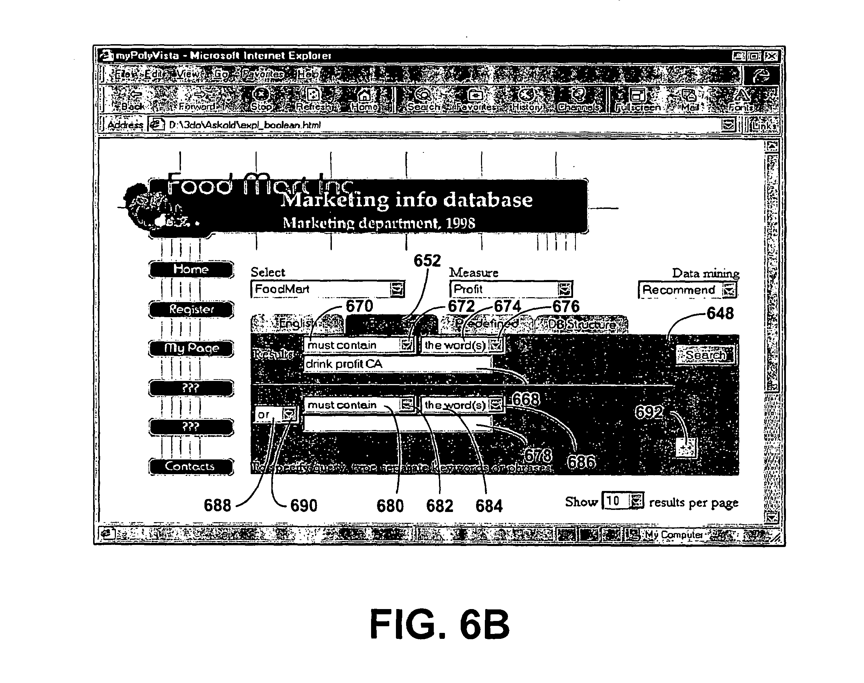

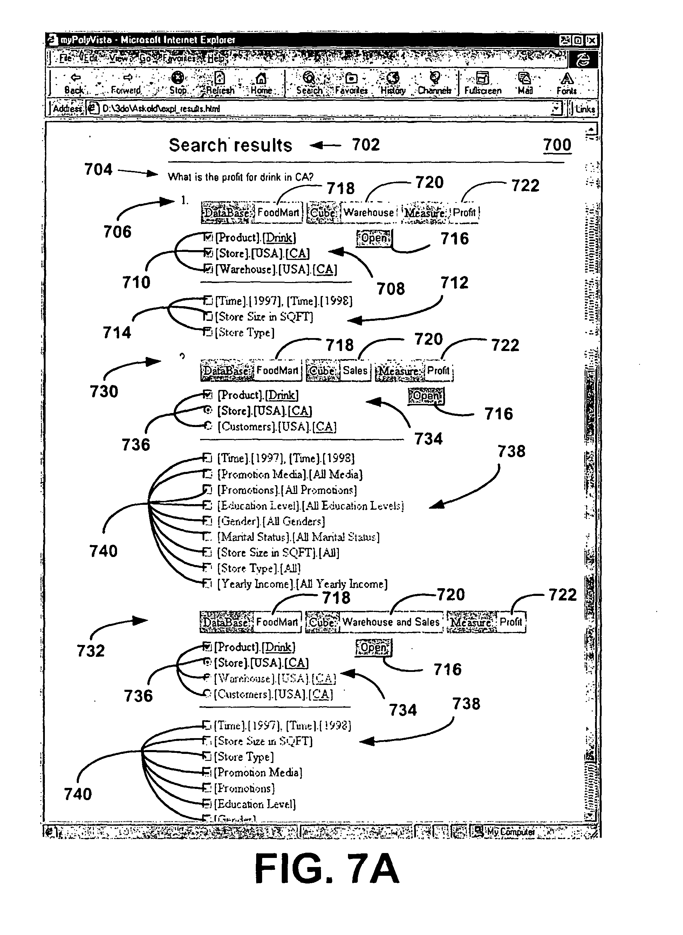

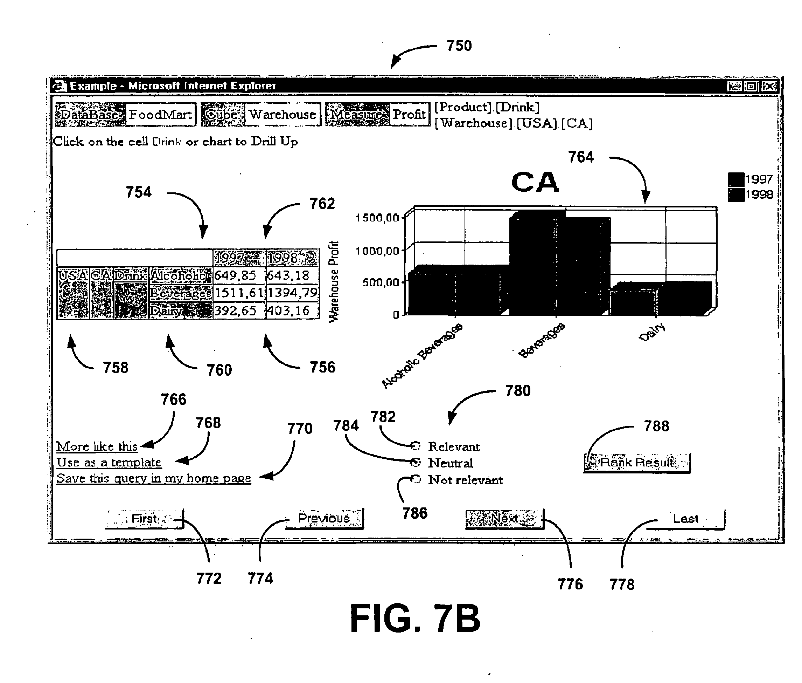

In a preferred embodiment of the system of this invention, the system includes a search engine interface (SEI), which is based on popular search engine concepts such as those found in search engines like AltaVista, Excite, or the like. The SEI allows the user to pose queries in a variety of search formats including Boolean queries, Natural Language queries, predefined queries and DB structured queries. Using the SEI, the user will construct a query in a manner similar to the way the user would construct queries in a typical search engine. Once the user constructs a query, the SEI allows the user to submit the query by hitting enter or a search button associated with the SEI. Such an SEI is described in greater detail in conjunction with the description of Figures 6A&B and 7A&B.

### Search Engine Query Result

Once the user has constructed and submitted a query, the SEI presents the results of the query and the query refining process (DMR results and sub-queries) a list format similar to results presented in a typical search engine. Although each list member includes a brief textual description, it does not point to a URL as it would in a typical search engine, but instead is a pointer into a particular results section of the query results as shown in Figure 7A. The first or top query result section contains results and/or information derived from the query "as is" along with certain obvious refinements, *e.g*., time, location, product, *etc.* Subsequent result sections include results and/or information from the operation of each DMR on the query elements and related elements. These results include simple refinements such as a particular type of a broad class of a keyword (*e.g*., coke from the keyword drink) as well as more complex refinements that actually amount of a new refined query or question. When a more complex refinement is selected by the user, the user will be given results and/or information from the refinement that can include simple refinements as well as more complex refinements, i. e., another query or question. Thus, the user can progress down a query-by-question path viewing results along the way in a cross-tabulated format and a graphical format as shown in Figure 7B.

### Surfer Interface

In another preferred embodiment of the system of this invention, the interface does not include a search engine query construction and submission construct or includes a surfer switch that permits the user to toggle between the SEI and the surfer interface. The surfer interface permits the user to bypass the query construction and submission window and instead to surf and/or view results of queries that the user has already submitted or that have been previously submitted by other users. These results can be all results in the application database or a profile restricted or filtered set of results based on user preferences. These results of existing queries can be categorized as follows: (1) predefined queries defined by site administrators, database administrators or the like; (2) popular user queries; (3) queries that are created as a result of background data mining operations; or (4) all results in the system results database.

### Email Interface

In another preferred interface, the user can construct and submit queries and await results via an email interface such a SMTP or WAP. Because certain queries posed by a user may require considerable processing time, the user can chose to submit the search and await results notification via the email interface. Alternatively, the user can fill out a basic template providing information about the type of information the user in interested in to create a user profile corresponding to the information entered into the template by the user. The user can specify what frequency of email notification the user desires, *e.g*., very frequent, frequent, or infrequent. The user will be able to fine tune the email frequency that is optimal for the user and the user can fine tune the content of the information the user is interested in. The email messages will include a result section as described in connection with the Search Engine Query Results section and Figure 7A herein. Thus, the email interface, which can be used in conjunction with the SEI or the surfer interface or all by itself, allows the user access to results and/or information of interest to the user on a time frame definable by the user. Thus, the user can be notified by email anytime a search that fits the user's profile is submitted or only when the results of a query fitting the user's profile includes interesting results. By interesting results, the inventor means results that show a high direct or inverse correlation with other data, that show data significantly impacted by data that fits the user's profile or any other statistically significant correlations involving data that fits the user's profile.

### Back End Processing

In another preferred embodiment of the system of this invention, the system includes back end processing routines for mining the data that may be of interest to a particular user or to the user community in general. Thus, the system on the application server(s) can track user activity and preferences so that the system routines can better tailor results and/or information content for each user or the user community in general. The system will track user behavior including, without limitation, search habits, query structures, results ratings, site preferences, feature preferences, and/or other personal preferences as well as user community habits including, without limitation, popular query formats, popular sites, popular system components, or the like. The system uses the tracked data to improve system features and/or facilities and/or to improve retrieved informational content for the whole community, a part of the community and/or a particular user in the community.

### Query-by-Question Pathways

One powerful aspect of the system of this invention is the ability for the system to walk a user down a path of results and/or information related to or derived from a single query. As each DMR returns results and/or information derived from the original query and generates one or more sub-queries that may be of interest to the user, the user can embark on an exploratory survey of results and/or information derived from each sub-query and each sub-query generated by the DMR from a selected sub-query. Thus, the user can be directed on a question by question basis to results and/or information related many level down a query-by-question pathway. Of course, each pathway will be different depending on the particular sub-query selections made by the user.

### System Architecture

The system is preferably designed to run on one or more dedicated application servers that receive queries, retrieve direct results to the queries and trigger DMRs to ferret out related results and/or information. As interesting relationships are found, the system stores the query and the results in a database. The system periodically analyzes the database to determine whether new databased results fit a user profile and notifies the user via the email interface.

One preferred architecture for the system of this invention, breaks the system into three basic levels: Presentation; Application and Data.

### Presentation Level

A preferred presentation level for systems implemented on a GII includes components which run on the user's rDPUs under a browser such and Internet Explore or Netscape. Preferably, the browser supports HTML, DHTML, Java-script, frames, VRML and Java-applets (NN4, IE4, and VRLM plugins) or the like. Of course, the browsers support all basic feature such as site-surfing, login, search, *etc.* For LAN based implementations, the rDPUs would use any custom software for query construction and submission and LAN communications.

### Application Level

A preferred application level for systems implemented on a GII includes components running on a server under a server OS such as UNIX based operating system and NT based operating systems, which include GII services for server to server and server to user connections and communications such as IIS from MicroSoft or the SMTP, WAP or similar protocols. Application servers are connected with the data servers via ethernet or other wide band data communication protocol for LAN based systems or via wide band communication protocol for GII implementation. Moreover, the application server and the database server can be the same server or can be implemented on the same internet site.

### Data Level

A preferred data level for systems implemented on a GII includes software components running on a database server under a server OS such as UNIX based operating system and NT based operating systems, which include GII services for server to server and server to user connections and communications. In addition, the database server includes a database, which can be any type of database including, without limitations, relational databases or multidimensional database such as OLAP database. In addition to the OS and to other standard software, the database server will include database service software including database communication protocol software such as SQL software (*e.g*., MS SQL Server) and MDDB service software such as MS OLAP Services.

### Detailed Description of the Drawings

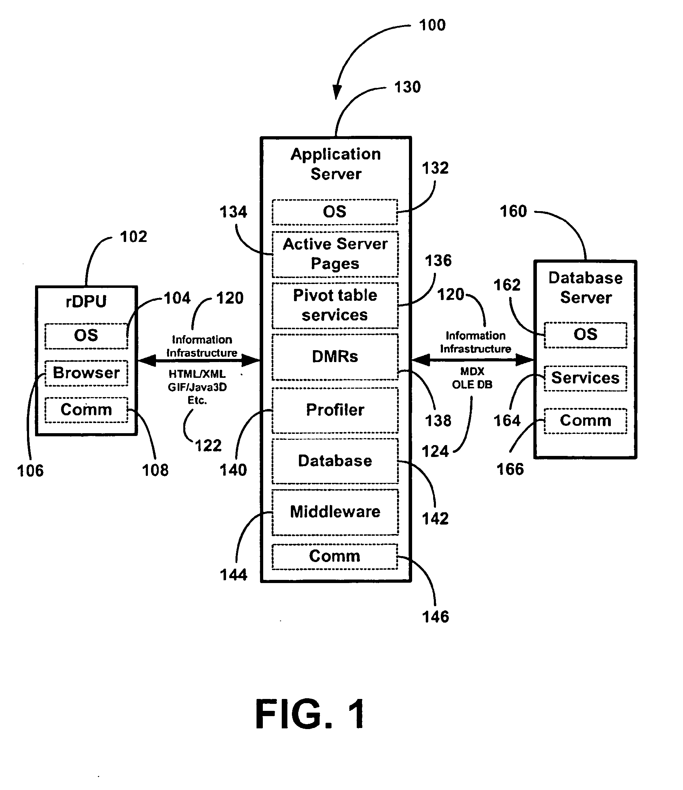

Referring now to Figure 1, a preferred embodiment of the system of the present invention, generally **100,** is shown to include a rDPU **102** which also includes an operating system **104,** a browser **106** and communication software **108.** Of course, the rDPU **102** also includes standard hardware components such as a processor, memory, mass storage devices, and peripherals (not shown). The rDPU **102** is in two-way communication with a application server **130** via an information infrastructure such as a LAN (local area network), a WAN (wide area network) or a global information infrastructure **120** using a communication protocol **122** such as HTML, XLM, GIF, Jave3D, TCP/IP, or the like. The application server **130** includes an operating system **132,** active server pages **134,** pivot table services **136,** DMRs **138,** a profiler **140,** a database **142,** a middleware **144** and communication software **146.** As with the rDPU **102,** the application server **130** includes standard hardware components such as a processor, memory, mass storage devices, and peripherals (not shown). The application server **130** is in two-way communication with a database server **160** via the information infrastructure **120** using a protocol **124** such as MDX or OLE DB. The database server **160** includes an operating system **162,** services **164** including database services such as OLAP services associated with OLAP mulitdimensional databases and SQL services, and communication software **166.**

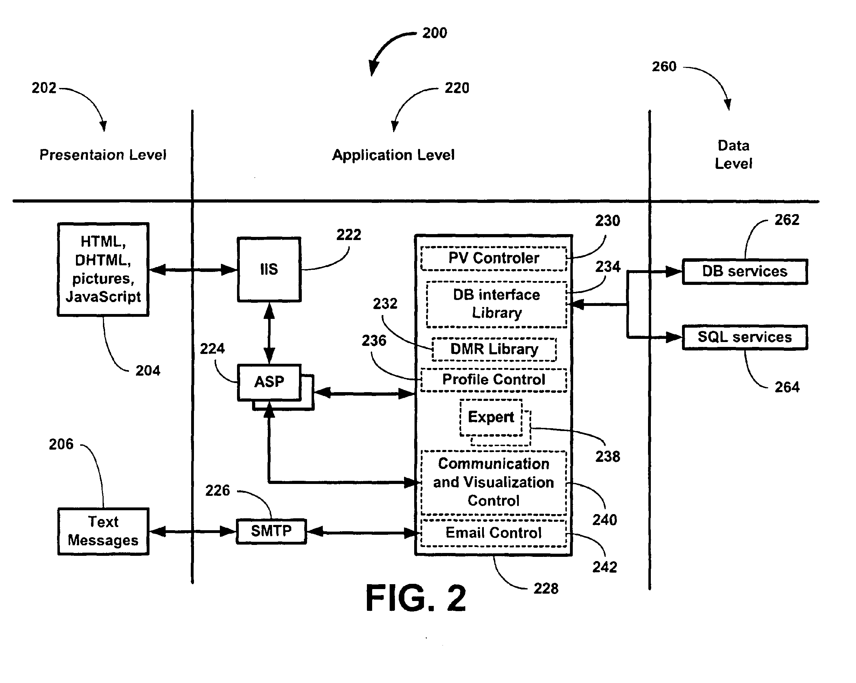

Referring now to Figure 2, a preferred architecture, generally **200,** for the system of this invention is shown schematically to include a presentation level **202,** a business level **220** and a data level **260.** The presentation level **202** involves interaction with the user at the rDPU **102** of Figure 1 using a communication protocol or combination of protocols **204** such as HTML, DHTML, pictures, JavaScript, Java3D, *etc.* over the GII **112** of Figure 1 and also involves text based message receiving and sending **206.** The business level **220** includes an IIS **222,** in two-communication with an ASP **224** and a SMTP **226.** The business level **220** also includes a query information content enhancing sub system (QIRCES) **228** including a query information content enhancing controller **230,** a DMR library **232,** a library of database interfaces **234,** a profile controller **236,** experts **238,** a communication/visualization controller **240** and an e-mail controller **242.** The ASP **224** is in two-way communication with QIRCES **228** and a component of the ASP **224** is in two-way communication with the communication/visualization controller **240** of QIRCES **228.** The SMTP **226** is in two-way communication with the e-mail controller **242.** The data level **260** includes DB services **262** such as OLAP services for OLAP multidimensional databases and SQL services **264.** The library **234** of QIRCES **228** is in two-way communication with the DB services **262** and the SQL services **264.** The present structure is applicable to any DB including MDDBs, relational databases, hierarchical database or the like and the MWI would be a middleware product designed to interface with the particular database being accessed.

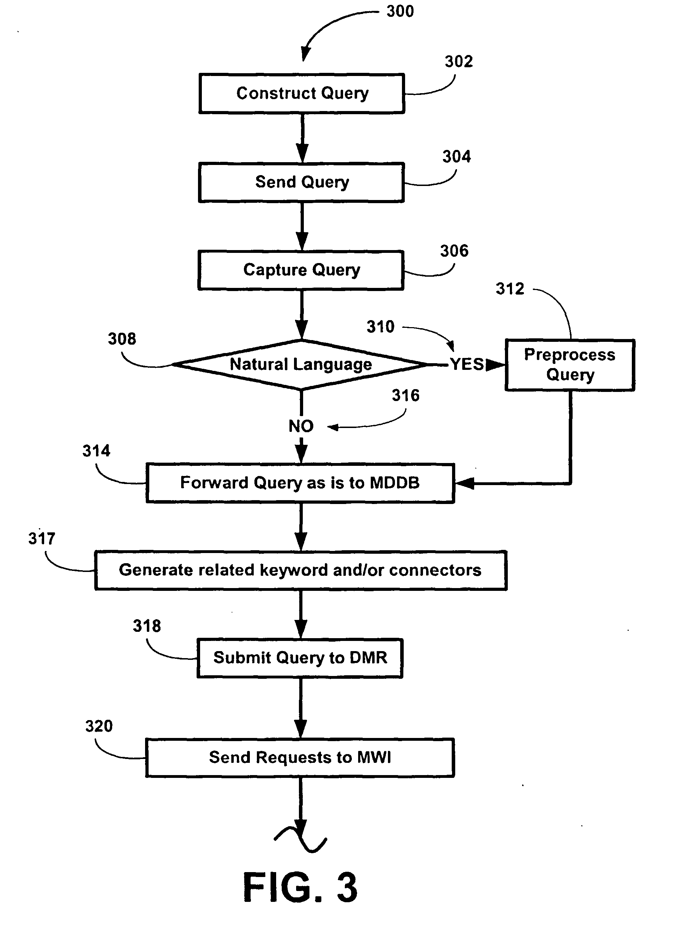

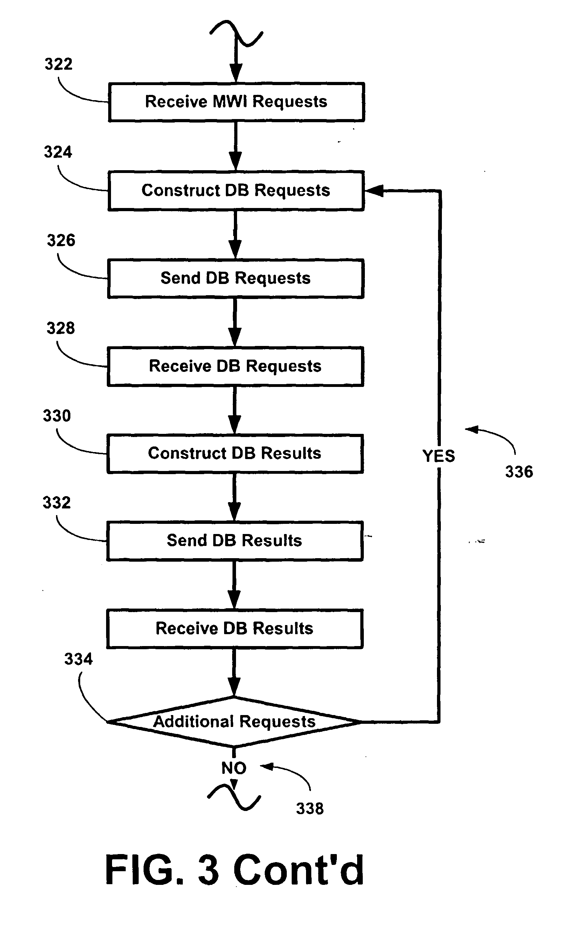

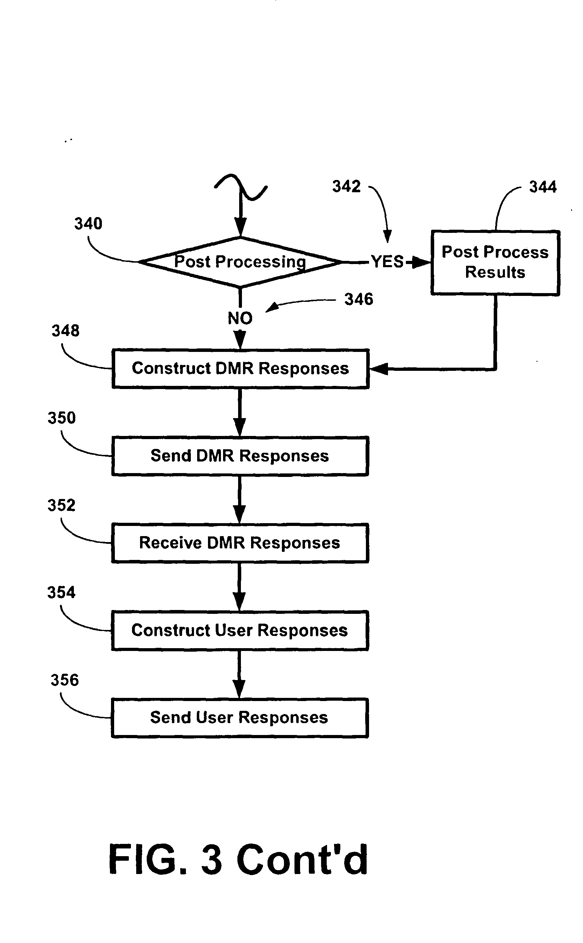

Referring now to Figure 3, a block flowchart of a preferred query informational content enhancing method of this invention, generally **300,** is shown to start with the user constructing a query or search question step **302.** The query can be constructed using any type of software that is capable of interacting with a database, including without limitation, database front ends, a search engine accessible for a network such as a internet or intranet, a spread sheet program such as Quattro Pro, Exel, etc. or any other software program that permits query construction and submission to a database. After the query is constructed (generally, typed into a text box in a screen), the query is forwarded over a network in a query send step **304** to an application server that captures the query in a query capture step **306.** The application server can be a server in an internet environment like a site on the world wide web or a digital processing unit in an intranet or LAN. The application server can be the same or different from the digital processing unit or server upon which the database is resident.

Once captured, the application server determines whether the query is a natural language query in a conditional test step **308.** If it is a natural language query, then the method 300 transfers control along a YES branch **310** to a pre-process query step **312,** where keywords and connectors are extracted from the natural language query. Once keywords and connectors are extracted from the natural language query, control is transferred to a forward query as is to a database step **314,** where results and/or information directly related to the query is gathered. If the query is not a natural language query, but a Boolean query or other query that comprises keywords and connectors, then control is transferred along a NO branch **316** to the forward query as is step **314.** Next or simultaneous with the as is query forward step **314,** related keywords and/or connectors are generated in a generate step **317.** Next, the query components (keywords and connectors) and related components (related keywords and/or connectors) are submitted to one or more DMRs in a submit step **318.**

The DMRs operate on the query terms to generate a request or a plurality of requests for results and/or information from a database in and sends the request(s) to a middleware interface which facilitates data extraction from the database in a send requests to MWI step **320.** For relational database, the MWI can be one of a variety of MWI products available on the open market including, without limitations, CocoBase from Thought, Inc., DataDirect SequeLink from Merant, DB2 Universal Database from IBM, dbAnywhere Server from Symatec, DbGen from 2Link Consulting, Inc., and other middleware products listed at www.javaworld.com/javaworld/tools/jw-tools-datamid.html or similar internet sites. For multi-dimensional databases, including OLAP databases, the middleware product is preferably the product disclosed in co-pending United States Patent Application Serial No. 09/713,674, filed 15 November 2000.

Once the MWI receives the requests in a MWI receive step **322,** the MWI constructs appropriate database requests in a construct step **324** and sends the DB requests onto the database in a send DB requests step **326.** Once the database receives the requests in a receive step **328,** the database constructs results corresponding to the requests in a construct step **330,** and sends the results onto the MWI in a send results step **332.** Once the MWI receives the DB results in a receive step **334,** the MWI reviews the results and the MWI requests from the DMR and determines whether any additional requests are required to complete the MWI requests in a conditional step **336.** If additional requests are required to produce a complete response to the DMR requests, then control is transferred along a YES branch **338** to the construct step **324** which repeats steps **326-336.**

Once the conditional step **336** determines no additional data are required to complete theMWI requests, then control is transferred along a NO branch **340** to a post-processing conditional step **342,** where the MWI checks to determine whether the DB responses required post-processing or analysis prior to construction of DMR responses. If post-processing is required, then control is transferred along a YES branch **344** to a post-processing step **346** and then to a construct DMR responses step **348;** otherwise, control is transferred along a NO branch **350** directly to the construct step **348,** where the DB results and any post-processing of the results are set forth in responses to the DMR requests and forwarded to the DMR in a send step **352.** Next, the DMR receives the DMR responses in a receive step **354** and constructs User responses in a construct step **356.** The user responses are then sent and displayed for the user in send step **358** and display step **360,** respectively.

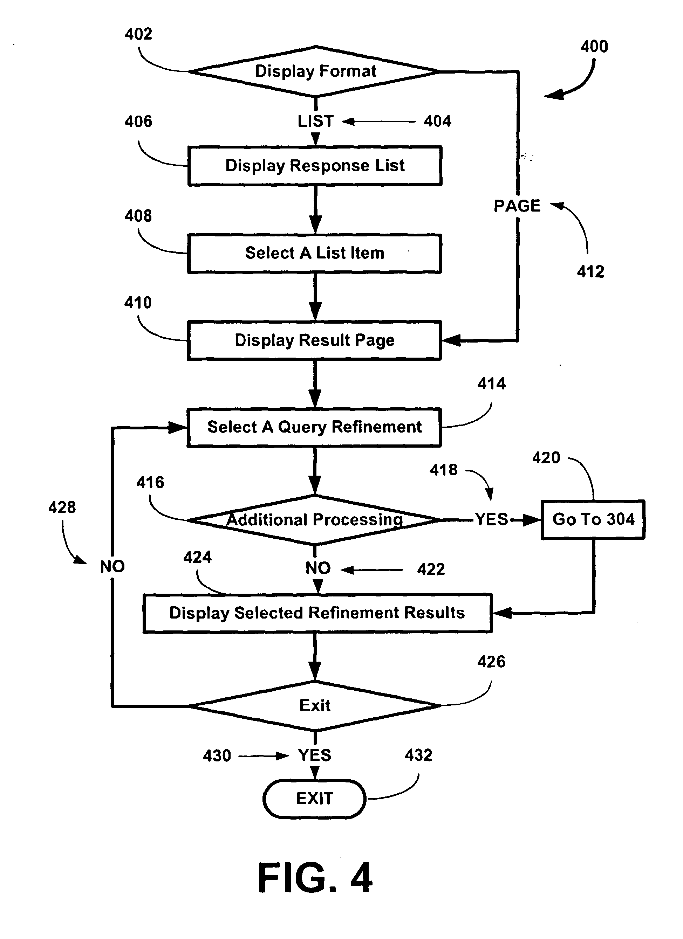

Referring now to Figure 4, a block flowchart of a preferred user result interaction method of this invention, generally **400,** is shown to include a display format conditional step **402,** where the routines check to determine whether the user prefers to see a condensed list of the results or prefers to see the result in page format from the get go. If the user prefers the list format, then control is transferred along a LIST branch **404** to display results list step **406.** Once the list is displayed, the user can select a given result by clicking on the result selector in a select step **408.** Once selected, the routine displays a page format positioned at the selected result in a display page format step **410.** If the user prefers the page format from the get go, the control is transferred from the conditional step **402** along a PAGE branch **412** to the page format step **410,** except that the page is positioned at the first result instead of at a selected result. The results page includes results and questions related to the query generated by DMRs which can be toggled on and off to allow the user to follow or construct a query-by-question path through the related query data. When the user selects a given refinement or question, that question becomes a new query, which gives rise to new results and new questions. This process can be continued until the user either finds the result he/she desires or determines that the path is not leading to any results of interest. The system can also save the query-by-question path, which can be saved simply as a composite query including all of the keywords and constraints associated with the final result in the path.

Once in the page format either at the start of the results or at some selected position within the page displayed results, the user can select a give query refinement by clicking on a given query refinement selector in a select refinement step **414.** The method **400,** then checks to see if the selected refinement requires additional processing in a conditional step **416.** If additional processing is required, then control is transferred along a YES branch **418** to a goto step **420,** which transfers control to step **304** of Figure 3. After the method set forth in Figure 3 completes obtaining results corresponding to the additional processing, control is transferred to a display selected refinement step **422,** which is also the step to which control is transferred along a NO branch **424,** if additional processing is not needed. Once the selected refinement is displayed, the method **400** check to see if the user wants to exit the routine in an exit test step **426.** If the user does not want to exit the method, then control is transferred along a NO branch **428** to the select step **414.** If the user does want to exit, then control is transferred along a YES branch **430** to an exit step **432.** The user review, displays and analyzes the refinements and the results derived therefrom using the SEI. A preferred SEI results screen display format is shown in Figure 7A&B and described herein.

Figure 4 also illustrates the query-by-question method of this invention. As the user selects a particular refinement and

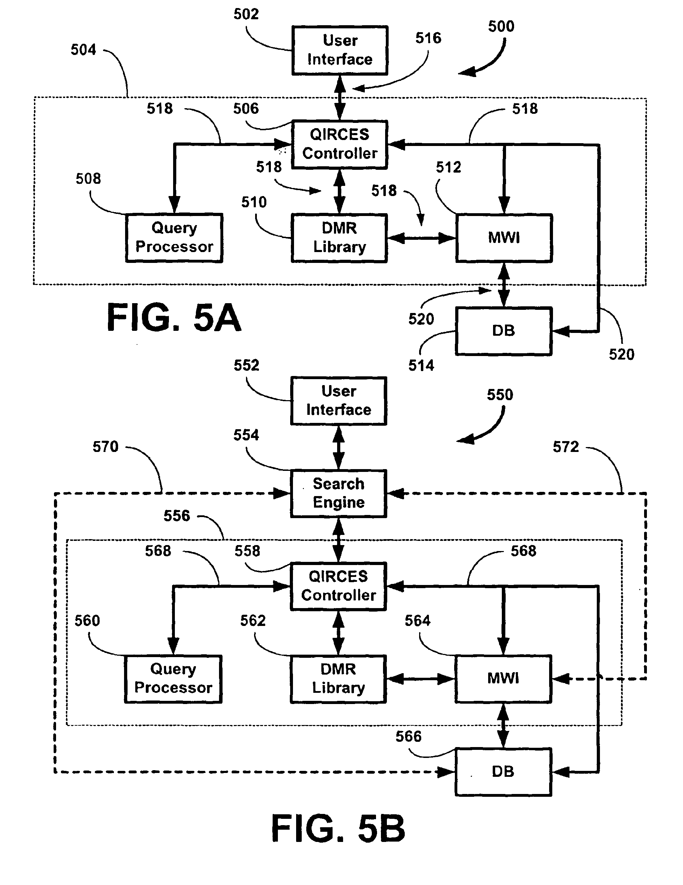

Referring now to Figure 5A, a first preferred structure, generally **500,** of this invention is shown to include a user interface **502,** which can be any interface capable of allowing a user to construct a search and submit the search to a database including, without limitation, a spread sheet such as Excel or Quattro Pro, a database front end or any other type of query construction software routine in active communication with a database. In prior art database searching environments, the user interface **502** would communicate directly with a database; however, in the structure **500** of this invention, an intermediary routine, the QIRCES system, is interposed between the user interface **502** and the database. The QIRCES system **504.** The system **504** includes a QIRCES controller **506,** a query processor **508,** which processes natural language queries to extract keyword and connector, a DMR library **510** and a MWI **512.** Finally, the structure **500** includes a database **514.** The user interface **502** is in two-way communication with the QIRCES controller **506** via communication pathway **516.** The QIRCES components are in two way communication as shown by the pathways **518,** while the controller **506** and the MWI **512** are in two-way communication with the database **514** along pathways **520.** The controller **506** is in communication with the database **514** to transmit the query as is and to receive the as is query results, while the MWI **512** is in communication with the database **514** to transmit and receive information required by each DMR in the DMR library **510.** The structure **500** can be implemented on a single digital processing unit, but is preferably implemented on a distributed processing environment such as an intranet (LAN or the like) or a global information infrastructure (the internet or world wide web).

Referring now to Figure 5B, a block flowchart of a preferred user interaction method of this invention, generally **550,** is shown to include a user interface **552,** which can be any browser software program such as Explorer from MicroSoft, Netscape from Netscape, *etc.* and a search engine program **554** such as Excite, AltaVista, Ask Jeeves, HotBot, Google, Lycos Search, Netscape Search, *etc.* In prior art search engine searching environments, the search engine **554** would communicate directly with a database; however, in the structure **550** of this invention, an intermediary system, the QIRCES system **556,** is interposed between the search engine **554** and the database. The QIRCES system **556** includes a QIRCES controller **558,** a query processor **560,** which processes natural language queries to extract keyword and connector, a DMR library **562** and a MWI **564.** Finally, the structure **550** includes a database **566.** The user interface **552** is in two-way communication with the search engine **554** via communication pathway **568,** which is in two-way communication with the QIRCES controller **556** via communication pathway **570.** The QIRCES components are in two way communication as shown by the pathways **572,** while the controller **556** and the MWI **562** are in two-way communication with the database **564** along pathways **574.** The controller **556** is in communication with the database **564** to transmit the query as is and to receive the as is query results, while the MWI **562** is in communication with the database **564** to transmit and receive information required by each DMR in the DMR library **562.** The search engine **554** can optionally be in direct two-way communication with the database **564** via communication pathway **576** and in optional direct two-way communication with the MWI **562** via communication pathway **578.** The structure **550** can be implemented on any distributed processing environment such as an intranet (LAN or the like) or a global information infrastructure (the internet or world wide web), but is preferably implemented on a global information infrastructure.

Referring now to Figures 6A and B, an illustrative screen image, generally **600,** of a preferred search engine interface to the QIRCES system and/or method of this inventions is shown to include a main window **602.** In this figure and the associated figures relating associated with this search engine interface, the interface is shown to operate in the Microsoft Internet Explorer browser. It should be recognized that other browsers can be used as well.

The main window **602** includes a browser banner **604,** browser control buttons **606,** a set of browser pull down menus **608,** a set of active browser icons **610,** and an address display area **612** with associated pull down menu button **614** to display previously visited sites. The main window **602** also includes a QIRCES SEI window **620,** which illustrates a preferred implementation of the SEI of the present invention. The QIRCES SEI window **620** includes a SEI banner **622** and a set of link buttons **624** to difference pages within the SEI. The link buttons **624** include a home link button **626,** a register button **628,** a my page button **630,** undefined buttons **632,** and a contacts button **634.** The QIRCES SEI window **620** also includes a select criterion selector **636** with associated pull down menu button **638,** a measure criterion selector **640** with associated pull down menu button **642,** and a data mining criterion selector **644** with associated pull down menu button **646.** The QIRCES SEI window **620** also includes a query construction and submission window **648.** The query window **648** includes a English tab **650** for entering natural language queries in English (or any other language), a Boolean tab **652** for entering Boolean queries, a predefined tab **654,** where the user can form one or more predefined queries or can select from a list of predefined queries, a DB structure tab **656,** where the user can enter queries that are structured for direct interaction with a given database schema and a show field **658** and pull down button **660** for controlling the number of result shown per page in the result windows described herein. The English tab **652** includes a query entry field **662** with associated scroll controls **664** and search submit button **666.**

Looking at Figure 6B, the window **648** is shown with the Boolean tab **652** activated. In the Boolean query construction window format, the window **648** includes a first term entry field **668** with an associated Boolean keyword (word or phrase) entry field **670** and pull down menu button **672** and an associated entry type field **674** and pull down menu button **676.** The window **648** also includes a second term entry field **678** with an associated Boolean keyword control field **680** and pull down menu button **682** and an associated entry type field **684** and pull down menu button **686.** The window **648** also includes a Boolean keyword connector field **688** and associated pull down menu button **690** and a add button **692** to add additional keywords or terms to the query.

Referring now to Figure 7A, the screen image **600** is shown displaying search results and includes the result window **700** having a banner **702** and including the search **704** to which the results apply. The window **700** also includes a first results section **706,** which includes a set of descriptor fields **708** that correspond to the query keywords used in the search with associated toggle or check boxes **710** to toggle the keywords on or off. The first results section **706** also includes a set of proposed refinements **712** and associated toggle or check boxes **714** for turning the refinements on and off. The refinements **712** are simple refinements based on the query "as is" and not from DMR processing. The section **706** also includes an open button **716,** a database identifier field **718,** a cube identifier field **720** and a measure identifier field **722.** The result first section **706** includes information and refinements that related directly to the query and do not include related or enhanced results and/or information retrieval refinements that are generated via the operation of a DMR. The remaining results section are results that are derived from the operation of a DMR on the query. Thus, a second and third results sections **730** and **732** include results from different DMRs.

The second and third results sections **730** and **732** include a set of primary result identifiers **734** with associated toggles or check boxes **736** some of which are turn on and some of which are turned off, and a set of refinements **738** with associated toggles or check boxes **740.** The user can turn toggles or check boxes on or off and then open a given result by hitting the open button **716** associated with the result section of interest. Once the user activates a result by hitting the open button **716** associated with a particular result section, the SEI actives a detailed results screen.

Looking at Figure 7B, an illustrative screen image, generally **750,** is shown containing detailed results and offering the user an opportunity to review the results in a cross-tab representation and a graphical representation. The screen **750** includes a detailed results window **752.** The window **752** includes an active cross-tab **754** displaying cross tabulated data **756** relating to geographical categories **758,** drink categories **760** and years **762.** The window **752** also includes a graph **764** showing the displayed cross tabulated data in graphical form. The window **752** also includes a "more like this" active field **766,** which sends a request to the QIRCES system to retrieve results like this in the QIRCES database. The window **752** also includes a "use as a template" active field **768** and a "save this query in my home page" active field **770,** where the use a template field **768** instructs the QIRCES system to use the query refinement as a template for future queries and the save field **770** instructs the QIRCES system to add the query to the user's home page for latter review.

The window **752** also includes a first button **772** for going to the first result, a previous button **774** for going to the previous result, a next button **776** for going to the next result, and a last button **778** for going to the last result. The window **752** also includes a rating or ranking protocol **780** shown here to include a Relevant button **782,** a Neutral button **784** and a Not Relevant button **786** with a rank result button **788.**

While this invention has been described fully and completely, it should be understood that, within the scope of the appended claims, the invention may be practiced otherwise than as specifically described. Although the invention has been disclosed with reference to its preferred embodiments, from reading this description those of skill in the art may appreciate changes and modification that may be made which do not depart from the scope of the invention claimed hereafter.

## Claims

1. A method for analyzing a query and generating related results comprising:
extracting keywords from the query;
generating at least one term related to at least one keyword;
supplying the keywords and terms to a data mining routine;
generating, within the data mining routine, a request or a plurality of requests for results related to the keywords and terms;
supplying the request or plurality of requests to a middleware interface (144) to at least one database;
converting the request or plurality of requests to a corresponding database request or a plurality of corresponding database requests;
generating, within the at least one database (142), a database response or a plurality of database responses corresponding to the database request or the plurality of database requests;
forwarding the database response or the plurality of database responses to the middleware (144);
converting, within the middleware (144), the database response or the plurality of database responses into a data mining response or a plurality of data mining responses;
supplying the data mining response or the plurality of data mining responses to the data mining routine;
generating, within the data mining routine, at least one result related to the query and at least one question related to the query derived from the related results, where the question is adapted to enhance information retrieval associated with the query; and
displaying the at least one related result and the at least one question.

2. A method as claimed in claim 1, wherein the related keyword generating step comprises polling a database for terms related to at least one keyword.

3. A method as claimed in claim 1 or 2, further comprising:
selecting, prior to the data mining routine supply step, at least one generated term.

4. A method as claimed in any one of the preceding claims, further comprising after said request generating step, generating, within the data mining routine an "as is" request corresponding to the query excluding the terms.

5. A method as claimed in any one of the preceding claims, further comprising the steps of:
selecting one of the displayed questions;
generating, within the data mining routine, a question request or a plurality of question requests for results related to the selected question;
supplying the question request or plurality of question requests to a middleware interface to the at least one database;
converting the question request or plurality of question requests to a corresponding database question request or a plurality of corresponding database question requests;
generating, within the at least one database, a database question response or a plurality of database question responses corresponding to the database question request or the plurality of database question requests;
forwarding the database question response or the plurality of database question responses to the middleware;
converting, within the middleware, the database question response or the plurality of database question responses into a data mining question response or a plurality of data mining question responses;
supplying the data mining question response or the plurality of data mining question responses to the data mining routine;
generating, within the data mining routine, at least one result related to the question and at least one sub-question related to the question derived from the related results, where the sub-question is adapted to enhance information retrieval associated with the query; and
displaying the at least one related result and the at least one sub-question.

6. A method as claimed in claim 5, further comprising the steps of :
selecting one of the sub-questions; and
repeating all but the selecting step of claim 5.

7. A method as claimed in any one of the preceding claims, wherein the query further includes constraints selected from the group consisting of containment constraints, grouping constraints, connector constraints, data constraints and mixtures and combinations thereof.

8. A method as claimed in any one of the preceding claims, wherein the data mining routines (DMRs) selected from the group consist of a chi squared DMR, a correlation DMR, a decision tree DMR, a market basket type DMR, a naive Bayes DMR based on Bayesain statistics, an association DMR, and a cluster DMR.

9. A method as claimed in any one of the preceding claims, wherein the database is selected from the group consisting of multidimensional databases, relational database, hierarchical databases and mixtures and combinations thereof.

10. A system comprising :
- a remote digital processing unit including an operating system,
communication routines, and a user interface having a query construction routine and a results display routine;
- an application server including an operating system, communication routines, and a query information retrieval content enhancing system comprising:
a controller,
a library of database interfaces,
a library of data mining routines,
a user profiler (140), and
a middleware interface (144) ;
- a database server including an operating system, communication routines, a database and database services; and
- a network interconnecting the remote digital processing unit, the application server and the database server,
said system being adapted to:
determine query keywords from a query constructed in the remote digital processing unit, generate at least one term related to at least one keyword in the query information retrieval content enhancing system,
supply the keywords and terms to the data mining routine in the query information retrieval content enhancing system,
generate, within the data mining routine, a request or a plurality of results related to the keywords,
supply the request or plurality of requests to the middleware interface (144) to at least one database in the database server,
convert the request or plurality of requests to a corresponding database request or plurality of corresponding database in the database server,
convert, within the middleware (144), the database response or the plurality of databases responses into a data mining response or a plurality of data mining responses, supply the data mining response or the plurality of data mining responses to the data mining routine in the query information retrieval content enhancing system;
generate, within the data mining routine, at least one result related to the query and at least one question related to the query derived from the related results, where the question is adapted to enhance information retrieval associated with the query.

11. A system as claimed in claim 10, wherein the data mining routine (DMR) is selected from a chi squared DMR, a correlation DMR, a decision tree DMR, a market basket type DMR, a naive Bayes DMR based on Bayesain statistics, an association DMR and a cluster DMR.

12. A system as claimed in claim 10 or 11, wherein the middleware interface is selected from the group consisting of multidimensional database middleware interface, relational database middleware interface, hierarchical database middleware interface and mixtures and combinations thereof.

## Patentansprüche

1. Verfahren zum Analysierten einer Anfrage und Erzeugen von zugehörigen Ergebnissen, das Folgendes beinhaltet:
Extrahieren von Schlüsselwörtern aus der Anfrage;
Erzeugen wenigstens eines auf wenigstens ein Schlüsselwort bezogenen Begriffs;
Senden der Schlüsselwörter und Begriffe zu einer Data-Mining-Routine;
Erzeugen, innerhalb der Data-Mining-Routine, einer Anforderung oder mehrerer Anforderungen um Ergebnisse in Bezug auf die Schlüsselwörter und Begriffe:
Senden der Anforderung oder der mehreren Anforderungen zu einer Middleware-Schnittstelle (144) zu wenigstens einer Datenbank;
Konvertieren der Anforderung oder der mehreren Anforderungen in eine entsprechende Datenbankanforderung oder in mehrere entsprechende Datenbankanforderungen;
Erzeugen, innerhalb der wenigstens einen Datenbank (142), einer Dalcnbankantwort oder mehrerer Datenbankantworten entsprechend der Datenbankanforderung oder der mehreren Datenbankanforderungen;
Weiterleiten der Datenbankantwort oder der mehreren Datenbankantworten zu der Middleware (144);
Konvertieren, innerhalb der Middleware (144), der Datenbankantwort oder der mehreren Datenbankantworten in eine Data-Mining-Antwort oder mehrere Data-Mining-Antworten:
Senden der Data-Mining-Antwort oder der mehreren Data-Mining-Antworten zu der Data-Mining-Routine;
Erzeugen, innerhalb der Data-Mining-Routine, wenigstens eines auf die Anfrage bezogenen Ergebnisses und wenigstens einer Frage in Bezug auf die von den verwandten Ergebnissen abgeleitete Anfrage, wobei die Frage so gestaltet ist, dass eine mit der Anfrage assoziierte Informationsgewinnung verbessert wird; und
Anzeigen des wenigstens einen verwandten Ergebnisses und der wenigstens einen Frage.

2. Verfahren nach Anspruch 1, wobei der Schritt des Erzeugens eines verwandten Schlüsselworts das Abfragen einer Datenbank nach Begriffen in Bezug auf wenigstens ein Schlüsselwort beinhaltet.

3. Verfahren nach Anspruch 1 oder 2, das ferner das Auswählen, vor dem Schritt des Sendens zur Data-Mining-Routine, wenigstens eines erzeugten Begriffs beinhaltet.

4. Verfahren nach einem der vorherigen Ansprüche, das ferner das Erzeugen, nach dem genannten Anforderungserzeugungsschrtt, innerhalb der Data-Mining-Routine, einer "as is"-Anforderung beinhaltet, die der Antrage exklusive der Begriffe entspricht.

5. Verfahren nach einem der vorherigen Ansprüche, das ferner die folgenden Schritte beinhaltet:
Auswählen von einer der angezeigten Frage;
Erzeugen, innerhalb der Data-Mining-Routine, einer Frageanforderung oder mehrerer Frageanforderungen um mit der gewählten Frage verwandte Ergebnissen;
Senden der Frageanforderung oder der mehreren Frageanforderungen zu einer Middleware-Schnittstelle zu der wenigstens einen Datenbank;
Konvertieren der Frageanforderung oder der mehreren Frageanforderungen zu einer entsprechenden Datenbankfrageanforderung oder zu mehreren entsprechenden Datenbankfrageanforderungen;
Erzeugen, innerhalb der wenigstens einen Datenbank, einer Datenbankfrageantwort oder mehrerer Datenbankfrageantworten, entsprechend der Datenbankfrageanforderung oder der mehreren Datenbankfrageanforderungen;
Weiterleiten der Datenbankfrageantwort oder der mehreren Datenbankfrageantworten zu der Middleware;
Konvertieren, innerhalb der Middleware, der Datenbankfrageantwort oder der mehreren Datenbankfrageantworten in eine Data-Mining-Frageantwort oder in mehrere Data-Mining-Frageantworten;
Senden der Data-Mining-Frageantwort oder der mehreren Data-Mining-Frageantworten zu der Data-Mining-Routine;
Erzeugen, innerhalb der Data-Mining-Routine, wenigstens eines auf die Frage bezogenen Ergebnisses und wenigstens einer Unterfrage, die auf die von den verwandten Ergebnissen abgeleitete Frage bezogen ist, wobei die Unterfrage so gestaltet ist, dass sie eine mit der Anfrage assoziierte Informationsgewinnung verbessert; und
Anzeigen des wenigstens einen verwandten Ergebnisses und der wenigstens einen Unterfrage.

6. Verfahren nach Anspruch 5, das ferner die folgenden Schritte beinhaltet:
Auswählen von einer der Unterfragen; und
Wiederholen aller Schritte außer dem Auswahlschritt von Anspruch 5.

7. Verfahren nach einem der vorherigen Ansprüche, wobei die Anfrage ferner Einschränkungen beinhaltet, die ausgewählt sind aus der Gruppe betstehend aus Begrenzungseinschränkungen, Gruppierungseinschränkungen. Verbindungseinschränkungen, Dateneinschränkungen sowie Gemischen und Kombinationen davon.

8. Verfahren nach einem der vorherigen Ansprüche, wobei die Data-Mining-Routinen (DMRs) ausgewählt werden aus der Gruppe bestehend aus einer Chi-Quadrat-DMR, einer Korrelations-DMR, einer Entscheidungsbaum-DMR, einer Warenkorbtyp-DMR, einer Naive-Bayes-DMR auf der Basis einer Bayes'schen Statistik, einer Assoziations-DMR und einer Cluster-DMR.

9. Verfahren nach einem der vorherigen Ansprüche, wobei die Datenbank ausgewählt ist aus der Gruppe bestehend aus multidimensionalen Datenbanken, relationalen Datenbanken, hierarchischen Datenbanken sowie Gemischen und Kombinationen davon.

10. System, das Folgendes umfasst:
- eine digitale Fernverarbeitungseinheit mit einem Betriebssystem. Kommunkationsroutinen und einer Benutzel-oberfläche mit einer Anfrageerstellungsroutine und einer Ergebnisanzeigeroutine;
- einen Applikationsserver mit einem Betriebssystem, Kommunikationsroutinen und einem System zum Verbessern des Anfrageinformationsgewinnungsinhalts, das Folgendes umfasst:
eine Steuerung,
eine Bibliothek von Datenbankschnittstellen,
eine Bibliothek von Data-Mining-Routinen,
einen Benutzerprofilersteller (140), und
eine Middleware-Schnittstelle (144);
- einen Datenbankserver mit einem Betriebssystem, Kommunikationsroutinen, einer Datenbank und Datenbankdiensten; und
- ein Netzwerk, das die digitale Fernverarbeitungseinheit, den Applikationsserver und den Datenbankserver miteinander verbindet,
wobei das genannte System so gestaltet ist, dass es:
Anfrageschlüsselwörter von einer in der digitalen Fernverarbeitungseinheit erstellten Anfrage ermittelt,
in dem System zum Verbessern des Anfrageinformationsgewinnungsinhalts wenigstens einen auf wenigstens ein Schlüsselwort bezogenen Begriff erzeugt,
die Schlüsselwörter und Begriffe zur Data-Mining-Routine in dem System zum Verbessern des Anfrageinformationsgewinnungsinhalts sendet,
innerhalb der Data-Mining-Routine eine Anforderung oder mehrere Ergebnisse in Bezug auf die Schlüsselwörter erzeugt,
die Anforderung oder die mehreren Anforderungen zur Middleware-Schnittstelle (144) zu wenigstens einer Datenbank in dem Datenbankserver liefert,
die Anforderung oder die mehreren Anforderungen zu einer entsprechenden Datenbankanforderung oder mehreren entsprechenden Datenbank in dem Datenbankserver umwandelt,
innerhalb der Middleware (144) die Datenbankantwort oder die mehreren Datenbankantworten in eine Data-Mining-Antwort oder in mehrere Data-Mining-Antworten umwandelt,
die Data-Mining-Antwort oder die mehreren Data-Mining-Antworten zur Data-Mining-Routine in dem System zum Verbessern des Anfrageinformationsgewinnungsinhalts liefert;
innerhalb der Data-Mining-Routine wenigstens ein auf die Anfrage bezogene Ergebnis und wenigstens eine auf die von den bezogenen Ergebnissen abgeleitete Anfrage bezogene Frage erzeugt, wobei die Frage so gestaltet ist, dass sie die mit der Anfrage assoziierte Informationsgewinnung verbessert.

11. System nach Anspruch 10, wobei die Data-Mining-Routine (DMR) ausgewählt ist aus einer Chi-Quadrat-DMR, einer Korrelations-DMR, einer Entscheidungsbaum-DMR, einer Warenkorbtyp-DMR, einer Naive-Bayes-DMR auf der Basis einer Bayes'schen Statistik, einer Assoziations-DMR und einer Cluster-DMR.

12. System nach Anspruch 10 oder 11, wobei die Middleware-Schnittstelle ausgewählt ist aus der Gruppe bestehend aus einer multidimensionalen Datenbank-Middleware-Schnittstelle, einer relationalen Datenbank-Middleware-Schnittstelle, einer hierarchischen Datenbank-Middleware-Schnittstelle sowie Gemischen und Kombinationen davon.

## Revendications

1. Procédé d'analyse d'une interrogation et de génération de résultats connexes comprenant :
l'extraction de mots-clés de l'interrogation;
la génération d'au moins un terme connexe à au moins un mot-clé;
la fourniture des mots-clés et termes à un sous-programme d'exploration de données;
la génération, dans le sous-programme d'exploration de données, d'une requête ou d'une pluralité de requêtes pour les résultats connexes aux mots-clés et termes :
la fourniture de la requête ou de la pluralité de requêtes à une interface intergicielle (144) avec au moins une base de données :
la conversion de la requête ou de la pluralité de requêtes en une requête de base de données correspondante ou une pluralité de requêtes de base de données correspondantes ;
la génération, dans l'au moins une base de données (142), d'une réponse de base de données ou d'une pluralité de réponses de base de données correspondant à la requête de bases de données ou à la pluralité de requêtes de base de données ;
l'envoi de la réponse de base de données ou de la pluralité de réponses de base de données à l'intergiciel (144) ;
la conversion, dans l'intergiciel (144), de la réponse de base de données ou de la pluralité de réponses de base de données en une réponse d'exploration de données ou une pluralité de réponses d'exploration de données,
la fourniture de la réponse d'exploration de données ou de la pluralité de réponses d'exploration de données au sous-programme d'exploration de données ;
la génération, dans le sous-programme d'exploration de données, d'au moins un résultat connexe à l'interrogation et d'au moins une question connexe à l'interrogation dérivée des résultats connexes, où la question est adaptée pour rehausser l'extraction d'informations associée à l'interrogation ; et
l'affichage de l'au moins un résultat connexe et de l'au moins une question.

2. Procédé selon la revendication 1, dans lequel l'étape de génération de mots-clés connexes comprend la scrutation d'une base de données à la recherche de termes connexes à au moins un mot-clé.

3. Procédé selon la revendication 1 ou 2, comprenant en outre :
la sélection, avant l'étape de fourniture au sous-programme d'exploration de données, d'au moins un terme généré.

4. Procède selon l'une quelconque des revendications précédentes, comprenant en outre après ladite étape de génération de requête, la génération, dans le sous-programme d'exploration de données d'une requête "telle quelle" correspondant à l'interrogation excluait les termes.

5. Procédé selon l'une quelconque des revendications précédentes, comprenant en outre les étapes suivantes :
sélection de l'une des questions affichées ;
génération, dans le sous-programme d'exploration de données, d'une requête de question ou d'une pluralité de requêtes de questions pour les résultats connexes à la question sélectionnée ;
fourniture de la requête de question ou de la pluralité de requêtes de question à une interface intergicielle avec l'au moins une base de données :
conversion de la requête de question ou de la pluralité de requêtes de question en une requête de question de base de données correspondante ou une pluralité de requêtes de question de base de données correspondante ;
génération, dans l'au moins une base de données, d'une réponse de question de base de données ou d'une pluralité de réponses de question de base de données correspondant à la requête de question de bases de données ou à la pluralité de requêtes de question de base de données ;
envoi de la réponse de question de base de données ou de la pluralité de réponses de question de base de données à l'intergiciel ;
conversion, dans l'intergiciel, de la réponse de question de base de données ou de la pluralité de réponses de question de base de données en une réponse de question d'exploration de données ou une pluralité de réponses de question d'exploration de données :
fourniture de la réponse de question d'exploration de données ou de la pluralité de réponses de question d'exploration de données au sous-programme d'exploration de données ;
génération, dans le sous-programme d'exploration de données, d'au moins un résultat connexe à la question et d'au moins une sous-question connexe à la question dérivée des résultats connexes, où la sous-question est adaptée pour rehausser l'extraction d'informations associée à l'interrogation ; et
affichage de l'au moins un résultat connexe et de l'au moins une sous-question.

6. Procédé selon la revendication 5, comprenait en outre les étapes de :
sélection de l'une des sous-questions ; et
répétition de toutes les étapes sauf l'étape de sélection de la revendication 5.

7. Procédé selon l'une quelconque des revendications précédentes, dans lequel l'interrogation comporte en outre des contraintes sélectionnées dans le groupe consistant en contraintes de confinement, contraintes de groupement, contraintes de connexion, contraintes de données et des mélanges et combinaisons de celles-ci.

8. Procédé selon l'une quelconque des revendications précédentes, dans lequel les sous-programmes d'exploration de données (DMR) sont sélectionnés dans le groupe consistant en DMR Khi carré, DMR de corrélation, DMR à arbre de dérision, DMR du type à panier à commissions, DMR Bayes naïf basé sur des statistiques bayésiennes, DMR associatif et DMR en grappes.

9. Procédé selon l'une quelconque des revendications précédentes, dans lequel la base de données est sélectionnée dans le groupe consistant en bases de données multidimensionnelles, base de données relationnelle, bases de données hiérarchiques et des mélanges et combinaisons de celles-ci.

10. Système comprenant :
- une unité de traitement numérique à distance comportant un système d'exploitation, des sous-programmes de communication, et une interface utilisateur comportant un sous-programme de construction d'interrogations et un sous-programme d'affichage de résultats :
- un serveur d'application comportant un système d'exploitation, des sous-programmes de communication, et un système de rehaussement de contenu à extraction d'informations d'interrogation, comprenant :
une unité de commande,
une bibliothèque d'interfaces de base de données,
une bibliothèque de sous-programmes d'exploration de données,
un profiteur d'utilisateur (140), et
une interface intergicielle (144) ;
- un serveur de base de données comportant un système d'exploitation, des sous-programmes de communication, une base de données et des services de base de données ; et
- un réseau interconnectant l'unité de traitement numérique à distance, le serveur d'application et le serveur de base de données,
ledit système étant adapté pour
déterminer des mots-clés d'interrogation à partir d'une interrogation construite dans l'unité de traitement numérique à distance,
générer au moins un terme connexe à au moins un mot-clé dans le système de rehaussement de contenu à extraction d'informations d'interrogation,
fournir les mots-clés et termes au sous-programme d'exploration de données dans le système de rehaussement de contenu à extraction d'informations d'interrogation, générer, dans le sous-programme d'exploration de données, une requête ou une pluralité de résultats connexes aux mots-clés;
fournir la requête ou pluralité de requêtes à l'interface intergicielle (144) avec au moins une base de données dans le serveur de base de données,
convertir la requête ou pluralité de requêtes en une requête de base de données correspondante ou pluralité de base de données correspondante dans le serveur de base de données,
convertir, dans l'intergiciel (144), la réponse de base de données ou la pluralité de réponses de base de données en une réponse d'exploration de données ou une pluralité de réponses d'exploration de données,
fournir la réponse d'exploration de données ou la pluralité de réponses d'exploration de données au sous-programme d'exploration de données dans le système de rehaussement de contenu à extraction d'informations d'interrogation ;
générer, dans le sous-programme d'exploration de données, au moins un résultat connexe à l'interrogation et au moins une question connexe à l'interrogation dérivée des résultats connexes, où la question est adaptée pour rehausser l'extraction d'informations associée à l'interrogation.

11. Système selon la revendication 10, dans lequel le sous-programme d'exploration de données (DMR) est sélectionné dans le groupe consistant en DMR Khi carré, DMR de corrélation. DMR à arbre de décision, DMR du type à panier à commissions, DMR Bayes naïf basé sur des statistiques bayésiennes, DMR associatif et DMR en grappes.

12. Système selon la revendication 10 ou 11, dans lequel l'interface intergicielle est sélectionnée dans le groupe consistant en interface intergicielle de base de données multidimensionnelles, interface intergicielle de base de données relationnelle, interface intergicielle de base de données hiérarchique et des mélanges et combinaisons de celles-ci.
